# EUROPÄISCHE PATENTSCHRIFT

(11) **EP 1 792 438 B1**
(45) Veröffentlichungstag und Bekanntmachung des Hinweises auf die Patenterteilung: **30.12.2015**
(21) Anmeldenummer: 05789481.8
(22) Anmeldetag: 18.08.2005
(51) Int. Cl.: H04L 12/10

(54) **KOMMUNIKATIONSSYSTEM, VERTEILERELEMENT UND NETZWERKGERÄT**
COMMUNICATION SYSTEM, DISTRIBUTION ELEMENT AND NETWORK DEVICE
SYSTEME DE COMMUNICATION, ELEMENT DE REPARTITION ET APPAREIL RESEAU

(30) Priorität: 24.09.2004 DE 102004046401
(43) Veröffentlichungstag der Anmeldung: 06.06.2007
(73) Patentinhaber: Unify GmbH & Co. KG, 81379 München (DE)
(72) Erfinder: BRIESKORN, Jürgen, 82269 Geltendorf (DE)
(74) Vertreter: Fritzsche, Thomas
(86) Internationale Anmeldenummer: PCT/EP2005/054068
(87) Internationale Veröffentlichungsnummer: WO 2006/032588

(56) Entgegenhaltungen:
- US-A1- 2002 042 229
- US-A1- 2003 033 098
- US-B1- 6 535 983

## Beschreibung

Die Erfindung betrifft ein Kommunikationssystem mit einem Verteilerelement mit einer Stromversorgungseinheit, an das eine Vielzahl von Netzwerkgeräten - insbesondere Kommunikationsendgerät - anschließbar ist. Des Weiteren betrifft die Erfindung ein Verteilerelement und ein Netzwerkgerät zur Verwendung in dem Kommunikationssystem.

Um Netzwerkgeräte, wie z.B. Netzwerkkameras, Lautsprecher, Access Points für drahtlose Netze oder Kommunikationsendgeräte, stärker in den professionellen und privaten Alltag zu integrieren, ist die Reduzierung der für den Anschluss benötigten Kabel eine wichtige Voraussetzung. Die drahtlose Datenübertragung über Technologien wie Wireless LAN, Bluetooth und DECT erspart zwar das so genannte "Twisted-Pair-Kabel", welches zur Datenübertragung benötigt wird, jedoch bleibt zur Spannungsversorgung meist ein Stromkabel erforderlich. In dem Standard IEEE 802.3af alias Power over Ethernet (PoE) erfolgt die Energieversorgung der Netzwerkgeräte über das Twisted-Pair-Kabel, so dass das Kabel zur Stromversorgung entfallen kann. Dies hat nicht nur Auswirkungen auf den Komfort für den Anwender, sondern verringert insbesondere auch den Installationsaufwand und die Installationskosten für den Netwerkbetreiber.

Power over Ethernet ist eine Technologie für das drahtgebundene Internet, die heute am meisten verbreitete LAN-Technologie (Local Aarea Network). PoE ermöglicht es, die elektrische Leistung, die für den Betrieb des einzelnen Geräts benötigt wird, über die Datenkabel statt über Stromversorgungskabel bereitzustellen. Dadurch lässt sich die Zahl der Kabel, die verlegt werden müssen, um ein Netzwerk zu installieren, minimieren, was in geringeren Kosten, kürzeren Ausfallzeiten, einfacherer Wartung und höherer Flexibilität bei der Installation resultiert. Es entfällt somit die Notwendigkeit jeden Zugangsknoten des Netzwerks mit einer elektrischen Installation auszustatten und zusätzliche Steckdosen zu installieren. Die Technologie eignet sich insbesondere für Anwendungen, wie z.B. die Telephonie über das Internet Protocol (IP).

Aus der US 2002/0042229 A1 ist ein Terminal bekannt, das eine lokale Stromversorgung aufweist und das über eine Leitung eines lokalen Netzwerks mit einer abgesetzten Stromversorgung über einen Repeater verbunden ist. Über ein Identifikationsmodul wird entweder die lokale oder die abgesetzte Stromversorgung an einen Gleichspannungswandler geschaltet, wobei die lokale Stromversorgung Vorrang hat. Über das Identifikationsmodul, das passive Komponenten wie Widerstände und Dioden aufweist, ist es möglich, das Vorhandensein des Terminals vor der Verwendung der Spannung der abgesetzten Stromversorgung zu detektieren.

In der US 6,535,983 B1 ist ein Ethernet-System beschrieben mit einer Mehrzahl von Endgeräten, die entweder eine lokale Stromversorgung oder eine abgesetzte Stromversorgung aufweisen. Die abgesetzte Stromversorgung wird über ein Hub oder Switch mit mehreren Ports und einer regelbaren Stromquelle bereitgestellt. Über Steuerspannungen unterschiedlicher Pegel, die von der Stromquelle aus über einen Port zu einem Endgerät sendet, erhält die Stromquelle eine Information darüber, ob das Endgerät eine lokale Stromversorgung oder eine abgesetzte Stromversorgung aufweist, und stellt die abgesetzte Stromversorgung nur dann bereit, wenn das entsprechende Endgerät eine solche benötigt.

Im Standard IEEE 802.3af werden zwei Basiskomponenten unterschieden. Die Energieverbraucher werden als "Powered Devices" (PD) bezeichnet, die Energieversorger werden als "Power Sourcing Equipment" (PSE) bezeichnet.

Der Standard sieht eine Übertragung mit einer Gleichspannung von 48 V vor, wobei die Stromaufnahme im Dauerbetrieb auf 350 mA beschränkt ist. Die maximale Speiseleistung ist auf 15,4 Watt und die maximale Leistungsaufnahme des Endgeräts nach Abzug der Leitungsverluste auf 13 Watt beschränkt. Während einer Startphase, die 100 ms dauert, darf das Endgerät 500 mA abnehmen. Die Stromversorgung der Netzwerkgeräte erfolgt über normale Kat.3- oder Kat.5-Kabel und die standardisierten RJ45-Stecker. Dabei nutzt das Verfahren die Tatsache, dass von den vier vorhandenen Adernpaaren im Falle des 10Base-T und 100Base-TX-Ethernet nur zwei zur Signalübertragung verwendet werden.

Ein zentraler Punkt im 802.3af-Standard ist die automatische Erkennung der Netzwerkgeräte. Dies wird durch ein Verfahren realisiert, das als "resistive Power Discovery" bezeichnet wird. Das Energieversorgungsgerät (Power Sourcing Equipment) prüft das Netzwerkgerät (Powered Device) auf Kompatibilität, bevor es Betriebsstrom über das Kabel ausliefert. Hierzu speist es in periodischen Abständen einen minimalen Strom ein und erkennt auf diese Weise, ob das Endgerät über einen 25-kOhm-Abschlusswiderstand verfügt. Ist dies der Fall, kann die Energieversorgung über das Netwerk erfolgen. Anschließend versorgt das Energieversorgungsgerät das Netzwerkgerät mit einer geringen Leistung. Nun kann letzteres mit seiner Kennung signalisieren, zu welcher von fünf unterstützten Leistungsklassen es gehört. Daraufhin kann das Energieversorgungsgerät das Netzwerkgerät mit der gewünschten Leistung versorgen. Diese Erkennung dauert insgesamt rund 1 Sekunde. In der nachstehenden Tabelle sind die in dem Standard 802.3af verschiedenen definierten Klassen aufgeführt, in welchen die Netzwerkgeräte betrieben werden können.

| Klasse | Verwendung | Maximale Entnahmeleistung (PD) | Abschlusswiderstand | Maximaler Strom |
|---|---|---|---|---|
| 0 | Default | 0,44 bis 12,95 W | 4420 Ω ± 1% | 15,4 W |
| 1 | Optional | 0,44 bis 3,84 W | 953 Ω ± 1% | 4,0 W |
| 2 | Optional | 3,84 bis 6,49 W | 549 Ω ± 1% | 7,0 W |
| 3 | Optional | 6,49 bis 12,95 W | 357 Ω ± 1% | 15,4 W |
| 4 | Optional | - | 255 Ω ± 1% | 15,4 W |

Der Leistungsverbrauch der Netzwerkgeräte ist wesentlich für den Energiehaushalt in dem Energieversorgungsgerät. Für ein optimales Energiemanagement ist es wichtig, dass die Netzwerkgeräte ihre Leistungsklasse genau identifizieren. Kann die genaue Leistungsklasse während der Startphase nicht identifiziert werden, so wird häufig die Leistungsklasse 0 (Default) als relevant herangezogen. Das Energieversorgungsgerät muss damit unabhängig vom tatsächlich benötigten Energieverbrauch den maximalen Energieverbrauch von 12,95 Watt pro angeschlossenem Netzwerkgerät bereitstellen.

Die Identifizierung der richtigen Leistungsklasse ist bei so genannten modularen Netzwerkgeräten, wie diese von Kommunikationsendgeräten bekannt sind, besonders relevant, da diese mit einer unterschiedlichen Anzahl an Ausbaustufen in ihrem Leistungsverbrauch je nach Konfiguration in unterschiedlichen Leistungsklassen eingeordnet werden müssen. Bekannte Verfahren zum optimalen Ermitteln der bereitzustellenden Energie in den Energieversorgungsgeräten sind proprietäre Protokolle nach Grundinitialisierung der Netzwerkgeräte, bei denen diese die benötigte Leistungsaufnahme signalisieren. Der Nachteil dieser Vorgehensweise besteht jedoch darin, dass das Netzwerkgerät hierzu zunächst in einen Zustand versetzt werden muss, in dem die Konfiguration auf Software-Basis erfolgen kann.

Weiterhin bekannt sind administrative Eingriffe in das Energieversorgungsgerät, insbesondere bei Netzwerkgeräten, die die Leistungsklasse 0 (Default) an das Energieversorgungsgerät berichten. Hierbei wird dem Energieversorgungsgerät der tatsächliche Leistungsverbrauch mitgeteilt und somit eine bauart-bedingte Leistungsgrenze des Energieversorgungsgeräts nicht überschritten. Vor allem in Netzwerken, in denen die Netzwerkgeräte häufig ausgetauscht und durch andere ersetzt werden, ist dieser administrative Aufwand hinsichtlich organisatorischer und monetärer Gesichtspunkte von Nachteil.

Die Aufgabe der vorliegenden Erfindung ist es deshalb, Maßnahmen anzugeben, die auf einfachere Art und Weise die Mitteilung des tatsächlich benötigten Energiebedarfs an den Energieversorger ermöglichen.

Diese Aufgabe wird durch ein Kommunikationssystem mit den Merkmalen des Patentanspruches 1, durch ein Verteilerelement mit den Merkmalen des Patentanspruchs 8 und ein Netzwerkgerät mit den Merkmalen des Patentanspruchs 9 gelöst.

Vorteilhafte Ausgestaltungen ergeben sich aus den abhängigen Patentansprüchen.

Das erfindungsgemäße Kommunikationssystem weist ein als Verteilerelement bezeichnetes Energieversorgungsgerät auf, das mit einer Stromversorgungseinheit gekoppelt ist, an das eine Vielzahl von Netzwerkgeräten anschließbar ist. Jedes der an dem Verteilerelement angeschlossenen Netzwerkgeräte weist zuzumindest ein Netzwerkelement auf, wobei jedes Netzwerkgerät von dem Verteilerelement mit Energie und Nachrichten versorgt wird. Weiterhin ist in jedem Netzwerkgerät eine Baugruppe angeordnet, die dazu eingerichtet ist, aus einem Netzwerk passiver Bauelemente einen dieses Netzwerk charakterisierenden Parameter zu ermitteln, welcher Parameter eine Aussage über eine maximale Entnahmeleistung des Netzwerkgeräts ermöglicht, wobei jedes der Netzwerkelemente des Netzwerkgeräts zumindest ein passives Bauelement aufweist, das Bestandteil des Netzwerks ist.

Mit dem vorliegenden Kommunikationssystem ist insbesondere die genaue Einstufung modularer Netzwerkgeräte hinsichtlich ihrer Leistungsklasse problemlos möglich. Je nach Ausbaustufe des modularen Netzwerkgerätes weist dieses einen unterschiedlichen Parameter auf, der aus unterschiedlichen passiven Bauelementen des Netzwerkgerätes resultiert. Die Modularität des Netzwerkgerätes wird dabei durch die Anzahl und die Zusammensetzung jeweiliger Netzwerkelemente bestimmt.

In einer zweckmäßigen Ausgestaltung der Erfindung sind die Netzwerkelemente des Netwerkgeräts miteinander gekoppelt, und die passiven Bauelemente jeweiliger Netzwerkelemente über einen Bus miteinander verbunden. Hierdurch ist auf besonders einfache Weise eine Zusammenschaltung der passiven Bauelemente zu einem Netzwerk möglich, woraus die Baugruppe den das Netzwerk kennzeichnenden Parameter ermitteln kann.

In einer weiteren Ausbildung sind die passiven Bauelemente jeweiliger Netzwerkelemente über den Bus parallel geschalten.

Als passive Bauelemente werden bevorzugt Widerstände, Kondensatoren und Dioden eingesetzt. Es ist dabei ausreichend, wenn in jedem der Netzwerkelemente jeweils nur ein einziges passives Bauelement, z.B. ein Widerstand, vorgesehen ist. Durch das Verbinden der passiven Bauelemente über den Bus ändert sich der an der Baugruppe anliegende Gesamtwiderstand, der dann einer Leistungsklasse gemäß dem IEEE 802.3af-Standard zugeordnet werden kann.

Gemäß einer Ausgestaltung der Erfindung ist das direkt mit dem Verteilelement verbundene Netzwerkelement durch ein Kommunikationsendgerät, d.h. ein auf Basis des Internetprotokolls arbeitendes Telefon, gebildet, und die weiteren Netzwerkelemente stellen Kommunikationserweiterungskomponenten dar. Bei diesen Kommunikationserweiterungskomponenten kann es sich beispielsweise um Akustikadapter zum Anschluss von Headsets, Display-Module, zusätzliche Tastaturblöcke oder Kartenleser handeln.

Gemäß einer weiteren vorteilhaften Ausgestaltung ermittelt das Verteilerelement jeweils die die Netzwerke der Netzwerkgeräte charakterisierenden Parameter unmittelbar nach dem Einschalten des Kommunikationssystems, um den maximalen Leistungsbedarf jeweiliger Netzwerkgeräte zu ermitteln. Mit anderen Worten bedeutet dies, dass zur Ermittlung des den Energieverbrauch charakterisierenden Parameters des Netzwerkgeräts der vollständige Start desselben noch nicht erfolgt sein muss. Insbesondere ist es nicht notwendig, dass die in dem Netzwerkgerät ablaufende Software die Konfiguration des Netzwerkgeräts übermittelt und einen entsprechenden Status in Form eines Parameters an die Baugruppe und weiter an das Verteilerelement überträgt. Vielmehr kann die Baugruppe den Parameter und damit die Leistungsklasse aus den resultierenden Zwei-Polparametern des passiven Busses ermitteln, wobei dieser Parameter durch das Netzwerk der passiven Komponenten gebildet ist, die durch den (passiven) Bus verbunden sind. Der Bus stellt dabei sicher, dass die Auswahl der entsprechenden Leistungsklasse eines beliebig konfigurierten Netzwerkgeräts bereits in der Startphase in der Baugruppe durch Gatter-Logik ohne eine Prozessor- oder Softwarebeteiligung ermittelt werden kann. Das Ermitteln kann somit entsprechend den Spezifikationen des IEEE-Standards 802.3af erfolgen.

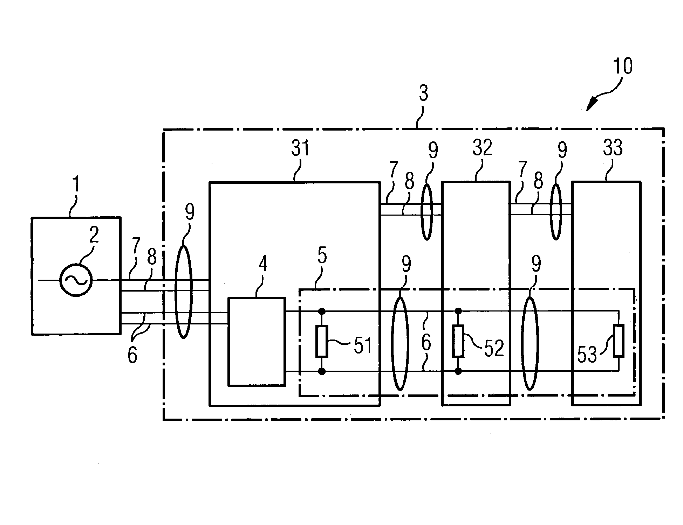

Die Erfindung wird nachfolgend anhand der Figur näher erläutert.

In der Zeichnung ist ein Kommunikationssystem 10 dargestellt. Das Kommunikationssystem weist ein Verteilerelement 1 und beispielhaft ein daran angeschlossenes Netzwerkgerät 3 auf. Der Einfachheit halber ist lediglich ein einziges Netzwerkgerät 3 dargestellt. In der Praxis kann eine Vielzahl an Netzwerkgeräten 3 an das Verteilerelement 1 angeschlossen werden. Die Kopplung zwischen dem Netzwerkgerät 3 und dem Verteilerelement 1 erfolgt über ein Kabel 9, welches aus einer Mehrzahl an Leitungen 6, 7, 8 besteht.

In das Verteilerelement 1 kann eine Stromversorgungseinheit 2 integriert sein, wie dies in der Figur dargestellt ist. Eine derartige Konfiguration wird als "Endspan Insertion" bezeichnet. Bei dieser handelt es sich um eine aktive Komponente, wie z.B. einen Switch, der das angeschlossene Netzwerkgerät 3 über das Kabel 9 direkt mit Strom versorgt. Der Vorteil einer derartigen Anordnung besteht in der kompakten Bündelung der Funktionen in einer Einheit. Denkbar wäre auch eine Realisierung, in der das Verteilerelement 1 und die Stromversorgungseinheit 2 als getrennte Komponenten ausgeführt sind. Eine derartige Anordnung wird als "Midspan Insertion" bezeichnet. Bei dieser Ausgestaltung kann ein einfacher Switch, der dem Verteilerelement 1 entspricht, mit einem so genannten Power Hub verbunden werden, welcher die Energieversorgung der angeschlossenen Netzwerkgeräte 3 übernimmt.

Das Netzwerkgerät 3 wird über eine Leitung 7 des Kabels 9 mit Strom versorgt und über eine oder eine Mehrzahl an Leitungen 8 findet der Datenaustausch statt. Darüber hinaus ist ein Leitungspaar (Bezugszeichen 6) vorgesehen, mittels welchem eine in dem Netzwerkgerät 3 vorgesehene Baugruppe 4 verbunden ist. Die Baugruppe 4 ist weiterhin mit einem Netzwerk 5 aus zumindest einer passiven Komponente 51, 52, 53 verbunden. Während der Startphase des Netzwerkgeräts wird über das Leitungspaar 6 der Abschlusswiderstand über die Baugruppe 4 durch das Verteilerelement 1 abgefragt. Der Abschlusswiderstand stellt einen das Netzwerkgerät 3 kennzeichnenden Parameter dar, der dem Verteilerelement 1 die Einordnung in eine Leistungsklasse gemäß dem IEEE 802.3af-Standard ermöglicht.

Das erfindungsgemäße Kommunikationssystem 3 eignet sich insbesondere für modular aufgebaute Netzwerkgeräte. Im vorliegenden Ausführungsbeispiel besteht das Netzwerkgerät 3 aus einem Netzwerkelement 31, das beispielsweise durch ein Kommunikationsendgerät (einem auf Basis des Internet-Protokoll arbeitenden Telefon) gebildet sein kann. In diesem ist die Baugruppe 4 sowie zumindest ein passives Bauelement 51 angeordnet. Darüber hinaus sind beispielhaft zwei weitere Netzwerkelemente 32, 33 vorgesehen, die jeweils über ein Kabel 9 mit dem Netzwerkelement 31 gekoppelt sind. Lediglich beispielhaft erfolgt die Verschaltung im vorliegenden Ausführungsbeispiel derart, dass die jeweiligen Netzwerkelemente 31, 32, 33 seriell miteinander verschalten sind. Jedes der weiteren Netzwerkelemente 32, 33, die beispielsweise Kommunikationserweiterungselemente (z.B. ein Display, einen zusätzlichen Tastaturblock, usw.) darstellen, weist ebenfalls zumindest ein passives Bauelement 52 bzw. 53 auf.

Die passiven Bauelemente 51, 52, 53 können im einfachsten Fall jeweils durch einen Widerstand gebildet sein, welche in der gezeigten Weise durch das als Bus ausgebildete Leitungspaar 6 parallel miteinander verschalten sind. Denkbar ist natürlich auch, die passiven Bauelemente 51, 52, 53 aus einer Mehrzahl an Bauelementen, insbesondere Widerständen, Dioden, Kondensatoren, auszubilden. In jedem Fall wird sich durch das Hinzufügen eines weiteren Netzwerkelements der an der Baugruppe 4 anliegende Abschlusswiderstand des Netzwerks 5 ändern. Damit ist gewährleistet, dass unabhängig von dem Vorsehen der Anzahl oder der Art der Netzwerkelemente 32, 33 ein das Netzwerk charakterisierender Parameter durch die Baugruppe 4 ermittelt werden kann, welchem in der Baugruppe selbst oder in dem Verteilerelement 1 eine Leistungsgruppe des IEEE 802.3af-Standards zugewiesen werden kann.

Der Vorteil der beschriebenen Vorgehensweise besteht darin, dass zur Ermittlung der Leistungsklasse eines Netzwerkgerätes 3 keinerlei aktive Bauelemente wie, z.B. Prozessoren oder eine auf diesem laufende Software, in Betrieb sein müssen. Unmittelbar nach der Startphase des Netzwerkgeräts liegt der Widerstand des Netzwerks 5 an entsprechenden Eingängen der Baugruppe 4 an, so dass das Verteilerelement 1 eine entsprechende Planung des Leistungsbedarfs einer Vielzahl an Netzwerkgeräten 3 vornehmen kann.

Darüber hinaus gehender administrativer Aufwand oder proprietäre Protokolle, wie dis im Stand der Technik vorgeschlagen wurde, sind somit nicht länger notwendig.

## Patentansprüche

1. Kommunikationssystem (10)
- mit einem Verteilerelement (1), das mit einer Stromversorgungseinheit (2) gekoppelt ist, an das eine Vielzahl von Netzwerkgeräten (3) anschließbar sind,
- bei dem jedes der an dem Verteilerelement (1) angeschlossenen Netzwerkgeräte (3) zumindest ein Netzwerkelement (31,32,33) aufweist, wobei jedes der Netzwerkgeräte (3) von dem Verteilerelement (1) mit Energie und mit Nachrichten versorgt wird,
- mit einer in jedem Netzwerkgerät (3) angeordneten Baugruppe (4), die dazu eingerichtet ist, aus einem Netzwerk (5) passiver Bauelemente (51,52,53) einen das Netzwerk charakterisierenden Parameter zu ermitteln, der eine Aussage über eine maximale Entnahmeleistung des Netzwerkgeräts (3) ermöglicht, wobei jedes der Netzwerkelemente (31,32,33) des Netzwerkgeräts (3) zumindest ein passives Bauelement (51,52,53) aufweist, das Bestandteil des Netzwerks (5) ist, wobei der das Netzwerk (5) charakterisierende Parameter ein Abschlusswiderstand ist, der eine Einordnung des Netzwerkgeräts (3) in eine Leistungsklasse nach dem Standard IEEE 802.3af ermöglicht.

2. Kommunikationssystem nach Anspruch 1,
**dadurch gekennzeichnet, dass**
die Netzwerkelemente (31,32,33) des Netzwerkgeräts (3) miteinander gekoppelt sind, und die passiven Bauelemente (51,52,53) jeweiliger Netzwerkelemente (31,32,33) über einen Bus (6) miteinander verbunden sind.

3. Kommunikationssystem nach Anspruch 1 oder 2,
**dadurch gekennzeichnet, dass**
die passiven Bauelemente (51,52,53) jeweiliger Netzwerkelemente (31,32,33) über den Bus (6) parallel geschalten sind.

4. Kommunikationssystem nach einem der vorhergehenden Ansprüche,
**dadurch gekennzeichnet, dass**
als passive Bauelemente (51,52,53) Widerstände, Kondensatoren und Dioden eingesetzt sind.

5. Kommunikationssystem nach einem der vorhergehenden Ansprüche,
**dadurch gekennzeichnet, dass**
das direkt mit dem Verteilerelement (1) verbundene Netzwerkelement (31) durch ein Kommunikationsendgerät gebildet ist und die weiteren Netzwerkelemente (32,33) Kommunikationserweiterungskomponenten darstellen.

6. Kommunikationssystem nach einem der vorhergehenden Ansprüche,
**dadurch gekennzeichnet, dass**
das Verteilerelement (1) jeweils die die Netzwerke (5) der Netzwerkgeräte (3) charakterisierenden Parameter unmittelbar nach dem Einschalten des Kommunikationssystems ermittelt, um den maximalen Leistungsbedarf jeweiliger Netzwerkgeräte (3) zu ermitteln.

7. Kommunikationssystem nach einem der vorhergehenden Ansprüche,
**dadurch gekennzeichnet, dass**
dieses eine Daten- und Stromübertragung nach dem Standard 802.3af aufweist.

8. Verteilerelement (1) zur Verwendung in einem Kommunikationssystem nach einem der Ansprüche 1 - 7.

9. Netzwerkgerät (3) zur Verwendung in einem Kommunikationssystem nach einem der Ansprüche 1 - 7.

## Claims

1. Communication system (10)
- with a distribution element (1), which is connected to a power supply unit (2), to which a plurality of network devices (3) can be connected,
in which each of the network devices (3) connected to the distribution element (1) comprises at least one network element (31, 32, 33), wherein each of the network devices (3) is supplied with energy and with messages by the distributor element (1),
- with a component group (4), which is arranged in each network device (3) and set up in order to determine from a network (5) of passive elements (51, 52, 53) a parameter which characterizes the network and which allows a statement regarding a maximum removal capacity of the network device (3), wherein each of the network elements (31, 32, 33) of the network device (3) comprises at least one passive element (51, 52, 53) which is part of the network (5), wherein the parameter characterizing the network (5) is a terminating resistor which allows a classification of the network device (3) in a power class according to the standard IEEE 802.3af.

2. Communication system according to Claim 1,
**characterized in that**
the network elements (31, 32, 33) of the network device (3) are coupled to one another, and the passive elements (51, 52, 53) of respective network elements (31, 32, 33) in each case are connected to one another via a bus (6).

3. Communication system according to Claim 1 or 2,
**characterized in that**
the passive elements (51, 52, 53) of repective network elements (31, 32, 33) are parallel connected via the bus (6).

4. Communication system according to any one of the preceding claims,
**characterized in that**
resistors, capacitors and diodes are used as passive elements (51, 52, 53).

5. Communication system according to any one of the preceding claims,
**characterized in that**
the network element (31) connected directly to the distributor element (1) is formed by a communication terminal and the other network elements (32, 33) represent communication expansion components.

6. Communication system according to any one of the preceding claims,
**characterized in that**
the distribution element (1) in each case determines the parameters characterizing the networks (5) of the network devices (3) immediately after the switching on of the communication system, in order to determine the maximum power demand of respective network devices (3).

7. Communication system according to any one of the preceding claims,
**characterized in that**
said communication system comprises a data and current transmission according to the standard 802.3af.

8. Distribution element (1) for use in a communication system according to one of Claims 1-7.

9. Network device (3) for use in a communication system according to one of Claims 1-7.

## Revendications

1. Système de communication (10)
- avec un élément de répartition (1) qui est couplé à une unité d'alimentation électrique (2) et auquel peuvent être branchés une pluralité d'appareils de réseau (3),
- dans lequel chacun des appareils de réseau (3) branchés à l'élément de répartition (1) comprend au moins un élément de réseau (31, 32, 33), chaque appareil de réseau (3) recevant de l'élément de répartition (1) de l'énergie et des messages,
- avec un ensemble (4), disposé dans chaque appareil de réseau (3), qui est conçu pour déterminer dans un réseau (5) de composants passifs (51, 52, 53) un paramètre, caractérisant le réseau, qui permet d'obtenir un renseignement sur une consommation maximale de l'appareil de réseau (3), chaque élément de réseau (31, 32, 33) de l'appareil de réseau (3) comprenant au moins un composant passif (51, 52, 53) qui est partie intégrante du réseau (5), le paramètre caractérisant le réseau (5) étant une résistance de terminaison qui permet un classement de l'appareil de réseau (3) dans une classe de puissance selon la norme IEEE 802.3af.

2. Système de communication selon la revendication 1,
**caractérisé en ce que**
les éléments de réseau (31, 32, 33) de l'appareil de réseau (3) sont couplés entre eux et les composants passifs (51, 52, 53) de chaque élément de réseau (31, 32, 33) sont reliés entre eux par le biais d'un bus (6).

3. Système de communication selon la revendication 1 ou 2,
**caractérisé en ce que**
les composants passifs (51, 52, 53) de chaque élément de réseau (31, 32, 33) sont montés en parallèle par le biais du bus (6).

4. Système de communication selon l'une quelconque des revendications précédentes,
**caractérisé en ce que**
des résistances, des condensateurs et des diodes sont mis en oeuvre en tant que composants passifs (51, 52, 53).

5. Système de communication selon l'une quelconque des revendications précédentes,
**caractérisé en ce que**
l'élément de réseau (31) relié directement à l'élément de répartition (1) est formé par un terminal de communication et que les autres éléments de réseau (32,33) représentent des composants d'extension de communication.

6. Système de communication selon l'une quelconque des revendications précédentes,
**caractérisé en ce que**
l'élément de répartition (1) détermine à chaque fois les paramètres caractérisant les réseaux (5) d'appareils de réseau (3) immédiatement après la mise sous tension du système de communication afin de déterminer le besoin maximal en énergie des appareils de réseau (3) en question.

7. Système de communication selon l'une quelconque des revendications précédentes,
**caractérisé en ce que**
celui-ci comprend une transmission de données et de courant selon la norme 802.3af.

8. Élément de répartition (1) à employer dans un système de communication selon l'une quelconque des revendications 1 à 7.

9. Appareil de réseau (3) à employer dans un système de communication selon l'une quelconque des revendications 1 à 7.
